Europäisches Patentamt

European Patent Office

Office européen des brevets

(19)

(11) Veröffentlichungsnummer: **0 007 072**
**B1**

(12) # EUROPÄISCHE PATENTSCHRIFT

(45) Veröffentlichungstag der Patentschrift:
04.08.82

(51) Int. Cl.³: **G 01 F 23/10,** B 60 K 15/06

(21) Anmeldenummer: 79102281.7

(22) Anmeldetag: 05.07.79

(54) **Füllstandsgeber, insbesondere zur Messung des Tankinhalts bei Kraftfahrzeugen.**

(30) Priorität: 12.07.78 DE 2830518

(43) Veröffentlichungstag der Anmeldung:
23.01.80 Patentblatt 80/2

(45) Bekanntmachung des Hinweises auf die Patenterteilung:
04.08.82 Patentblatt 82/31

(84) Benannte Vertragsstaaten:
FR GB IT

(56) Entgegenhaltungen:
FR-A-764 843
FR-A-1 069 140
FR-A-2 364 599
US-A-1 771 794
US-A-3 200 646

(73) Patentinhaber: **SWF-Spezialfabrik für Autozubehör Gustav Rau GmbH, Stuttgarter Strasse 119, D-7120 Bietigheim-Bissingen (DE)**

(72) Erfinder: **Anschütz, Rolf, Eglosheimer Strasse 31, D-7140 Ludwigsburg-Pflugfelden (DE)**
Erfinder: **Prohaska, Hans, Nelkenweg 44, D-7120 Bietigheim-Bissingen (DE)**
Erfinder: **Schmid, Eckhardt, Schillerstrasse 14, D-7129 Güglingen (DE)**

Füllstandsgeber, insbesondere zur Messung des Tankinhalts bei Kraftfahrzeugen

Die Erfindung geht aus von einem Füllstandsgeber mit den Merkmalen des Oberbegriffs des Anspruchs 1.

Bei einer aus der Praxis bekannten Ausführung ist der Schwimmerhebel im Bereich der Abwinkelung mit Kunststoff umspritzt, so daß eine Auflagefläche für eine Kontaktfeder gebildet ist. Das freie Ende des Schwimmerhebels, welches durch das Lagerauge hindurchgeführt ist, ist durch eine Bohrung einer Distanzscheibe gesteckt und dahinter verstemmt. Diese bekannte Befestigungsart des Schwimmerhebels verursacht nicht unbeträchtliche Montage- und Herstellkosten. Außerdem ist bei der bekannten Ausführung ein zusätzlicher Kontaktlappen für den Stromweg von der in das Kunststoffgehäuse eingebetteten Kontaktbahn zu einer Kontaktfeder vorgesehen, die zwischen die Kontaktfeder und das Lagerauge geklemmt ist und eine Bohrung aufweist, durch die das freie Ende des Schwimmerhebels hindurchragt. Schließlich ist bei dieser Ausführung die zur Widerstandsplatte führende Kontaktbahn mit einem Gegenkontakt auf der Widerstandsplatte verlötet, was ebenfalls umständlich und zeitraubend ist. Die Widerstandsplatte ist durch Haltezapfen am Gehäuse gehalten, deren Kopf warm verformt wird.

Zur Montage des aus mehreren Einzelteilen bestehenden Füllstandsgebers sind also mehrere Arbeitsschritte notwendig, die das Erzeugnis verteuern.

Bei der Ausführung eines Füllstandsgebers gemäß der FR-A-2 364 599 ist ein im wesentlichen U-förmiger Bügel zwischen zwei mit Lagerbohrungen versehenen Wänden eines Gehäuses eingesetzt. Die Bohrungen bilden zusammen ein Laerauge für das abgewinkelte Ende des Schwimmerhebels.

Der U-förmige Bügel weist einen Fortsatz in Form eines Winkelbleches auf, dessen mit dem Bügel verbundener Schenkel parallel und dessen anderer Schenkel senkrecht zum Schwimmerhebel verläuft. Im letztgenannten Schenkel befindet sich eine Öffnung, durch die der Schwimmerhebel hindurch gesteckt ist, so daß er in Richtung seiner Schwenkachse gesichert ist.

Bei einer derartigen Konstruktion ist es ebenfalls schwierig und zeitraubend, den Schwimmerhebel am Gehäuse zu montieren. Die Montage des bekannten Füllstandsgebers wird außerdem auch dadurch umständlich und teuer, daß der Schleifkontakt, der mit der Widerstandsplatte zusammenwirkt, separat auf dem abgewinkelten Ende des Schwimmerhebels sitzt.

Der Erfindung liegt die Aufgabe zugrunde, einen Füllstandsgeber konstruktiv so zu vereinfachen, daß eine einfache und damit kostengünstige Herstellung und Montage gegeben ist.

Dies wird erfindungsgemäß bei einem Füllstandsgeber, der die Merkmale aus dem Oberbegriff des Anspruchs 1 aufweist, dadurch erreicht, daß der Bügel über das Lagerauge gestülpt ist, daß zur axialen Sicherung ein Rastmittel vorhanden ist, das an den einen Seitenschenkel des Bügels angeformt ist, und daß mit dem Bügel die Widerstandsplatte oder der schleifende Kontakt drehfest verbunden ist.

Bei einem erfindungsgemäßen Füllstandsgeber wird der Bügel, der als Kunststoffspritzteil gefertigt werden kann, zur Montage des Schwimmerhebels lagerichtig auf das Lagerauge gestülpt und das abgewinkelte Ende des Schwimmerhebels durch die dann koaxialen Bohrungen in den Seitenschenkeln des Bügels und im Lagerauge gesteckt. Dabei rastet der Schwimmerhebel in Rastmittel am Bügel ein und ist damit ohne zusätzliche Arbeitsgänge gegen ein axiales Verschieben gesichert. Die Widerstandsplatte bzw. der Schleifkontakt wird zusammen mit dem Bügel am Gehäuse montiert.

Ein einfacher Anschluß des als Kontaktfeder am Bügel gehaltenen Schleifkontakts an das Stromnetz ergibt sich, wenn die entsprechende Kontaktbahn gemäß Anspruch 3 unmittelbar in den Bereich des Lagerauges geführt ist.

Gemäß Anspruch 5 wird auch die Widerstandsplatte einfach mittels Fixierbolzen und Schnappfedern am Gehäuse gehalten. Die Stromübertragung zur Widerstandsbahn erfolgt ohne Lötverbindung über eine Druckfeder, die sich auf der entsprechenden Kontaktbahn abstützt.

Weitere vorteilhafte Ausgestaltungen der Erfindung beziehen sich auf Ausführungen mit einer beweglichen Widerstandsplatte.

Die Erfindung wird nachstehend anhand der in den Zeichnungen dargestellten Ausführungsbeispiele näher erläutert. Es zeigt

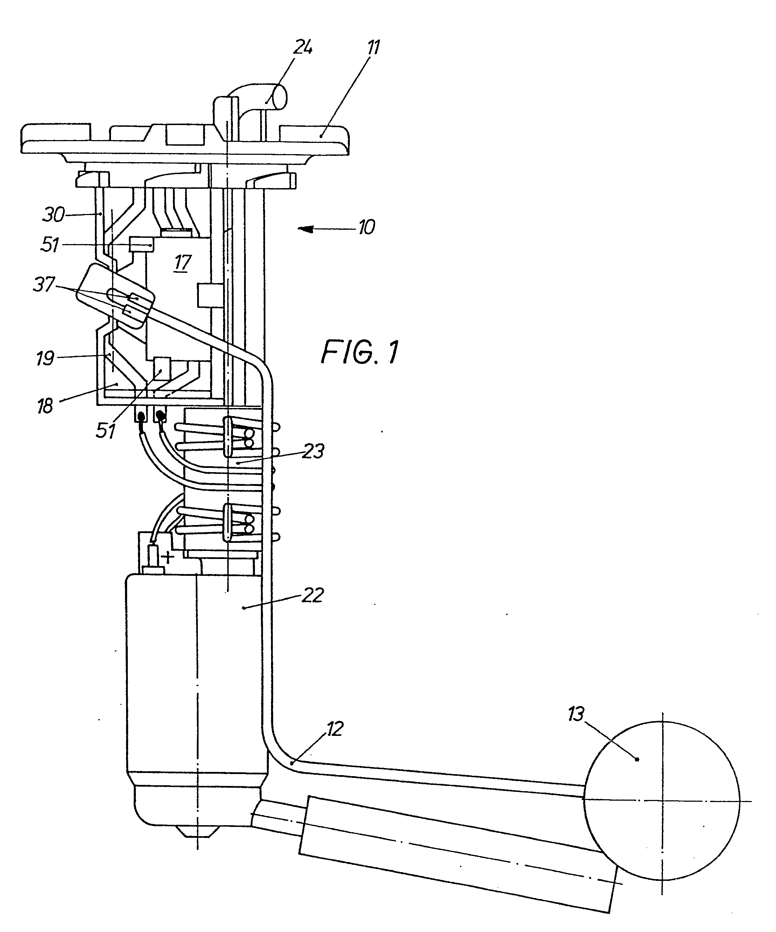

Fig. 1 eine Seitenansicht eines Füllstandsgebers mit integrierter Benzinpumpe,

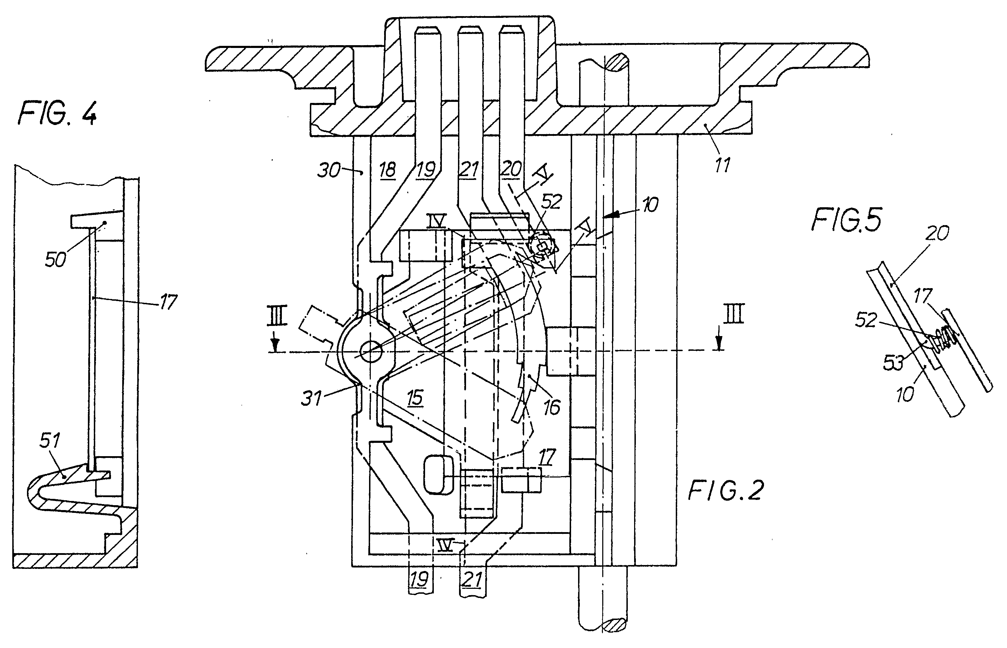

Fig. 2 in vergrößerter Darstellung eine Ansicht auf das Gehäuse des Füllstandsgebers,

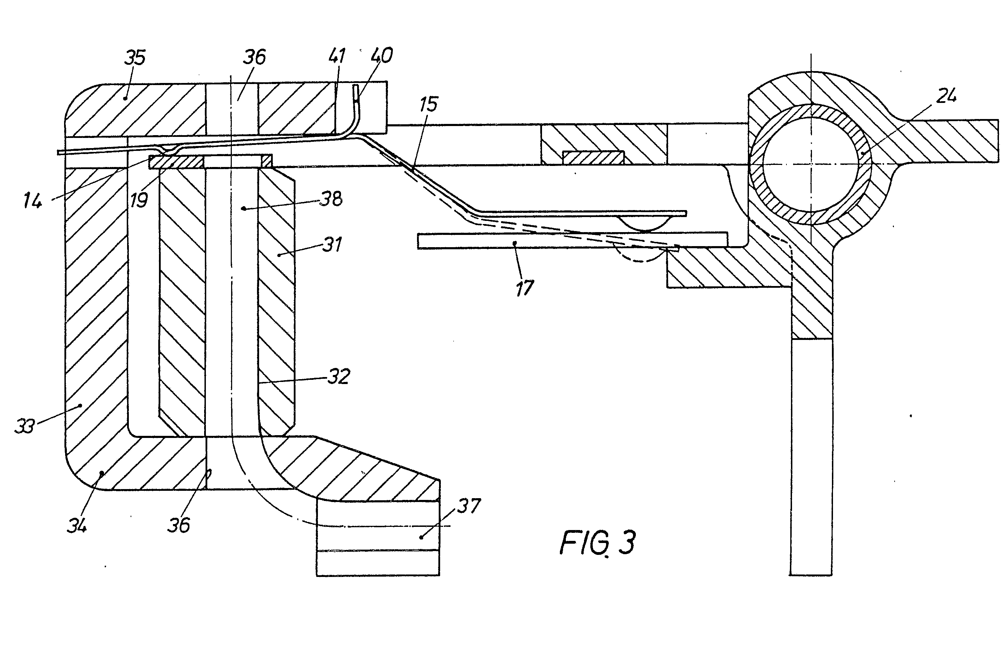

Fig. 3 einen Schnitt entlang der Schnittlinie III-III in Fig. 2,

Fig. 4 einen Schnitt entlang der Schnittlinie IV-IV in Fig. 2,

Fig. 5 einen Schnitt entlang der Schnittlinie V-V in Fig. 2 und die

Fig. 6 bis 11 Teilschnitte und Seitenansichten weiterer Ausführungsbeispiele mit einer beweglichen Widerstandsplatte.

Der Füllstandsgeber hat ein Gehäuse 10 aus Kunststoff mit einem Deckel 11, der bajonettverschlußartig in einer Tanköffnung befestigt werden kann.

An einem Schwimmerhebel 12 ist eine Schwimmerkugel 13 befestigt. Der Schwimmerhebel 12 ist schwenkbar am Gehäuse 10 angelenkt. Eine mit dem Schwimmerhebel 12 drehfest verbundene Kontaktfeder 15 schleift auf einer Widerstandsbahn 16 einer Widerstandsplatte 17, die im Gehäuse 10 festgelegt ist. In die Gehäuserückwand 18 sind Kontaktbahnen 19, 20 und 21 eingebettet. Eine Kontaktbahn 19 führt zur Kontaktfeder 15, eine Kontaktbahn 20 zur Widerstandsbahn 16 und die Kontaktbahn 19 sowie die dritte Kontaktbahn 21 über nicht näher dargestellte Verbindungselemente zum Elektromotor einer Benzinpumpe 22, die über einen Schlauch 23 am Gehäuse 10 gehalten ist und Benzin durch das Rohr 24 aus dem Tank herauspumpt.

In der einen Seitenwand 30 des Gehäuses ist ein Lagerauge 31 mit einer Lagerbohrung 32 angeformt. Über dieses Lagerauge 31 ist ein U-förmiger Bügel 33 gestülpt, der zwei Seitenschenkel 34 und 35 mit koaxialen Bohrungen 36 aufweist. Am Seitenschenkel 34 sind als Rastmittel zwei Rastnasen 37 angespitzt, die den Schwimmerhebel 12 wäscheklammerartig umgreifen, dessen freies Ende 38 durch die Bohrungen 36 und die Lagerbohrung 32 hindurchgesteckt ist. Über diesen Bügel 33 mit seinen Rastnasen 37 ist also der Schwimmerhebel 12 auf einfachste Weise gelenkig am Gehäuse 10 befestigt und gegen eine axiale Verschiebung gesichert.

An der Innenfläche des Seitenschenkels 35 ist die Kontaktfeder 15 drehfest gehalten, die eine abgewinkelte Haltelasche 40 aufweist, die in einen Durchbruch 41 im Bügel 33 greift. Die Kontaktfeder 15 hat als Kontaktfläche eine herausgedrückte Erhebung 14, die unmittelbar auf der Kontaktbahn 19 schleift, die in den Bereich des Lagerauges 31 geführt ist. Diese Kontaktfeder 15 bewirkt aufgrund ihrer Formgebung und ihrer inneren Vorspannung zugleich einen Spielausgleich zwischen dem Bügel 33 und dem Lagerauge 31.

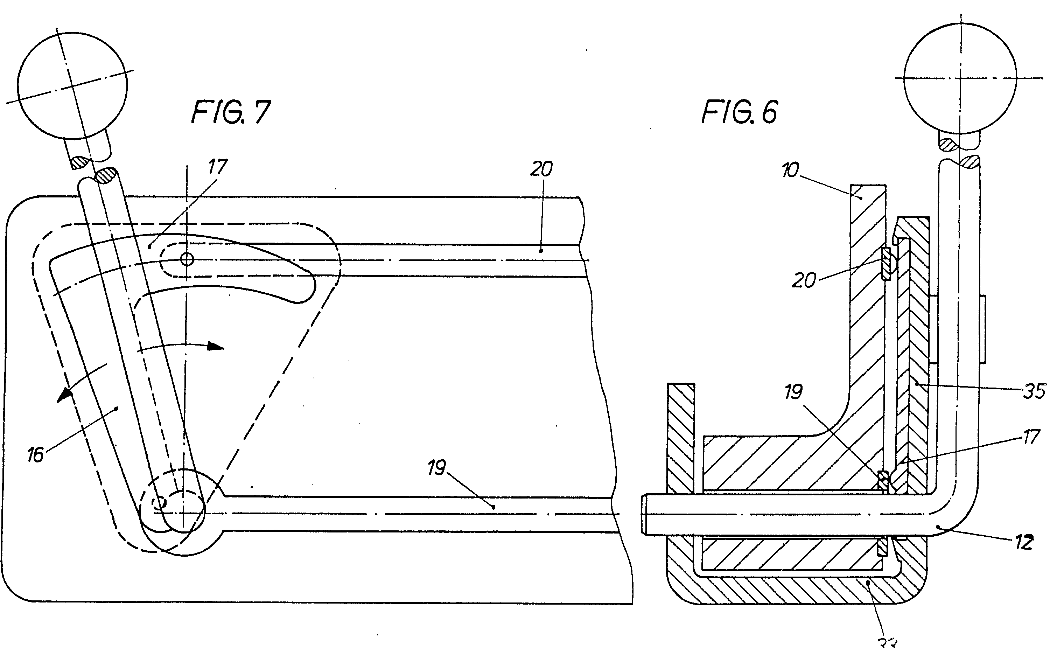

Aus Fig. 4 ist ersichtlich, daß die Widerstandsplatte 17 auf Fixierbolzen 50 aufliegt und durch Kunststoffschnappfedern 51, die an das Gehäuse 10 angespritzt sind, gehalten wird. Dabei erfolgt der Stromübergang von der Kontaktbahn 20 zur Widerstandsbahn 16 über eine Druckfeder 52, die zwischen Kontaktbahn 20 und Widerstandsplatte 17 eingespannt ist, wobei ein aus der Kontaktbahn 20 herausgescherter Dorn 53 zur Führung der Druckfeder 52 dient.

Aus dieser Beschreibung eines Ausführungsbeispiels wird ersichtlich, daß die Montage gegenüber der eingangs erwähnten bekannten Ausführung wesentlich vereinfacht wurde, weil die Teile lediglich am Gehäuse verrastet werden, wobei zugleich die Stromwege hergestellt werden, ohne daß dazu zusätzliche Arbeitsgänge wie Löten oder Verstemmen erforderlich sind.

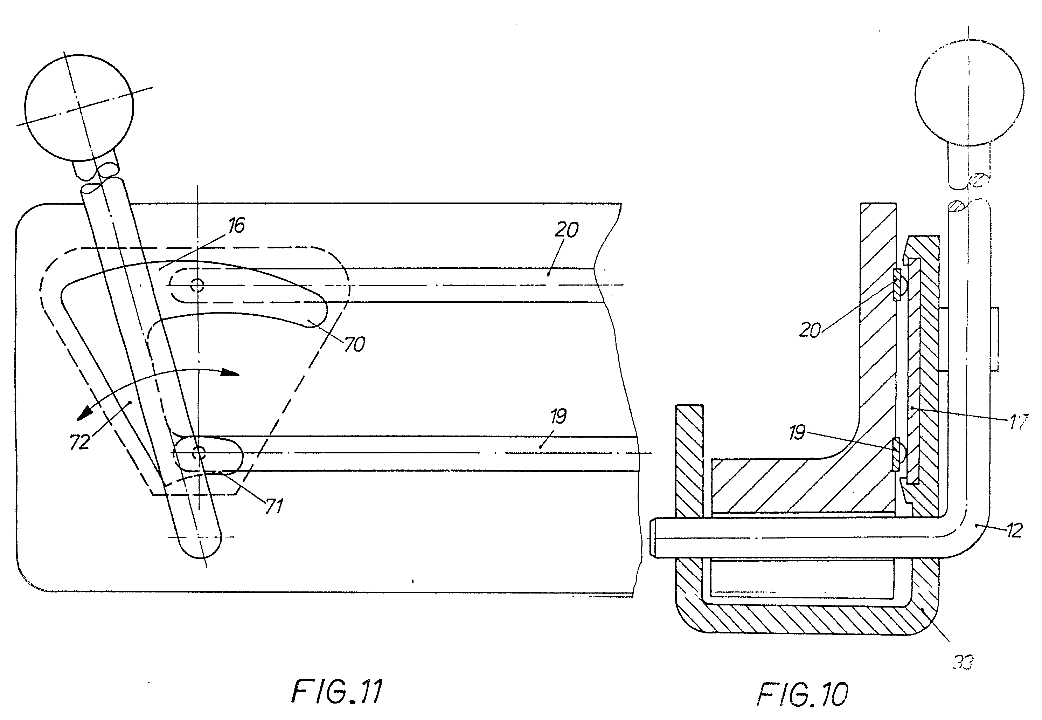

Bei den Ausführungsbeispielen nach den Fig. 6 bis 11 wird der Schwimmerhebel 12 wie bei dem zuvor beschriebenen Ausführungsbeispiel am Gehäuse 10 befestigt. Nun ist aber mit dem Bügel 33 nicht eine Kontaktfeder, sondern die Widerstandsplatte 17 drehfest verbunden, so daß die Widerstandsbahn 16 über entsprechend ausgebildete Kontakte an den Kontaktbahnen 19 und 20 schleift. Bei den Ausführungsbeispielen nach Fig. 6 und 10 ist die Widerstandsplatte 17 unmittelbar an der Innenwand eines Seitenschenkels 35 des Bügels 33 verrastet.

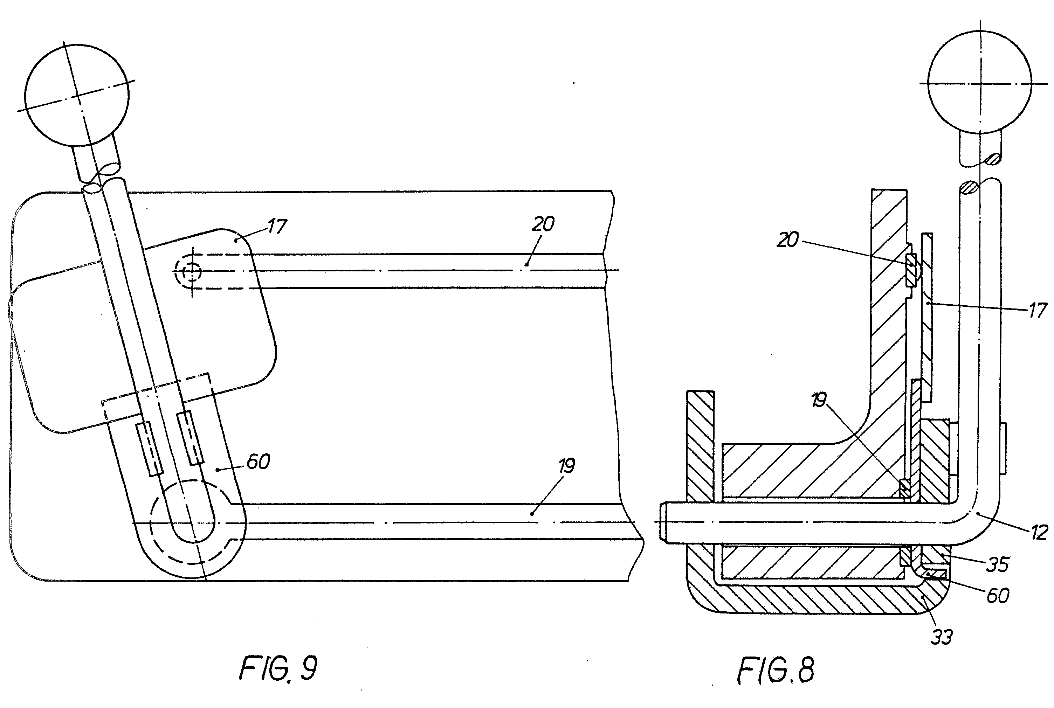

Bei der Ausführung nach Fig. 8 ist an dem Seitenschenkel 35 eine Kontakthaltefeder 60 drehfest gehalten, mit der die Widerstandsplatte 17 vernietet ist.

Gemäß Fig. 11 ist die Widerstandsbahn 16 aus zwei Kreissegmenten 70 und 71 und einem sie verbindenden Steg 72 aufgebaut. Auf diese Weise ist eine größere Widerstandsänderung bei einer bestimmten Verschwenkbewegung des Schwimmerhebels meßbar.

## Patentansprüche

1. Füllstandsgeber, insbesondere zur Messung des Tankinhalts bei Kraftfahrzeugen, der einen Schwimmerhebel (12), dessen abgewinkeltes Ende (38) in einem Lagerauge (31) in einer Gehäusewand (30) schwenkbar ist, und einen im wesentlichen U-förmigen Bügel (33) mit mit dem Lagerauge (31) fluchtenden Bohrungen (36) in den Seitenschenkeln (34, 35), durch die das Ende (38) des Schwimmerhebels (12) gesteckt ist, und Mittel zur Sicherung des Schwimmerhebels (12) in Achsrichtung aufweit, wobei aus der Schwenkbewegung des Schwimmerhebels (12) eine Relativbewegung zwischen einer Widerstandsplatte (17) und einem darauf schleifenden Kontakt abgeleitet wird, dadurch gekennzeichnet, daß der Bügel (33) über das Lagerauge (31) gestülpt ist, daß zur axialen Sicherung des Schwimmerhebels (12) ein Rastmittel (37) vorhanden ist, das an den einen Seitenschenkel (34) des Bügels (33) angeformt ist, und daß mit dem Bügel (33) die Widerstandsplatte (17) oder der Schleifkontakt drehfest verbunden ist.

2. Füllstandsgeber nach Anspruch 1, dadurch gekennzeichnet, daß als Rastmittel zwei Rastnasen (37) dienen, die den Schwimmerhebel (12) wäscheklammerartig umgreifen.

3. Füllstandsgeber nach Anspruch 1 oder 2, dadurch gekennzeichnet, daß der Schleifkontakt an der Innenfläche eines Seitenschenkels (35) des Bügels (33) als Kontaktfeder (15) drehfest befestigt ist und daß die Kontaktfeder (15) unmittelbar auf einer in den Bereich des Lagerauges (31) geführten, in der Gehäusewand (18) eingebetteten Kontaktbahn (19) schleift.

4. Füllstandsgeber nach Anspruch 3, dadurch gekennzeichnet, daß die Kontaktfeder (15) wenigstens eine abgewinkelte Haltelasche (40) aufweist, die in einen Durchbruch (41) im Bügel (33) eingreift und daß die Kontaktfeder (15) eine herausgedrückte Erhebung (14) als Kontaktfläche aufweist, die auf der Kontaktbahn (19) schleift.

5. Füllstandsgeber nach wenigstens einem der vorhergehenden Ansprüche, dadurch gekennzeichnet, daß die Widerstandsplatte (17) mittels Fixierbolzen (50) und Schnappfedern (51) am Gehäuse (10) festgelegt ist und die Stromübertragung über eine Druckfeder (52) erfolgt, die zwischen einer Kontaktbahn (20) und der Widerstandsbahn (16) eingeklemmt ist, wobei ein aus der Kontaktbahn (20) herausgescherter, senkrecht abstehender Dorn (53) zur Führung der Druckfeder (52) dient.

6. Füllstandsgeber nach Anspruch 1 oder 2, dadurch gekennzeichnet, daß mit dem Bügel (33) die Widerstandsplatte (17) drehfest verbunden ist und die Widerstandsbahn (16) über Festkontakte an im Gehäuse festgelegten Kontaktbahnen (19, 20) schleift.

7. Füllstandsgeber nach Anspruch 6, dadurch gekennzeichnet, daß die Widerstandsplatte (17) an der Innenfläche eines Seitenschenkels (35) des Bügels (33) verrastet ist.

8. Füllstandsgeber nach Anspruch 6, dadurch gekennzeichnet, daß die Widerstandsplatte (17) mit einer mit dem Bügel (33) drehfest verbundenen Kontaktfeder (60) vernietet ist.

9. Füllstandsgeber nach den Ansprüchen 7 oder 8, dadurch gekennzeichnet, daß die Widerstandsplatte (17) zwei kreissegmentartige, durch einen radialen Steg (72) miteinander verbundene Widerstandsbahnen (70, 71) aufweist, auf den die Festkontakte schleifen.

**Claims**

1. A level indicator, especially for measuring the fuel level of motor vehicle tanks, which includes a float lever (12), the bent end (38) of which may be swivelled in a bearing eye (31) of a housing wall (30), and a substantially U-shaped yoke (33) comprising bores (36) in the lateral shanks (34, 35) which are flush with the bearing eye (31), through which bores the end (38) of the float lever (12) is put and means to secure the float lever (12) in the axial direction, and from the swivelling motion of the float lever (12) is derived a relative motion between a resistor board (17) and a contact sliding thereon, characterized in that the yoke (33) is put on the bearing eye (31), that there is a locking means für axially securing the float lever, which locking means is formed on one lateral shank (34) of the yoke (33), and that the resistor board (17) or the sliding contact are connected with the yoke (33) in a manner protected against twisting.

2. A level indicator according to claim 1, characterized in that two detents (37) serve as locking means which clasp the float lever (12) like clothes pins.

3. A level indicator according to claims 1 or 2, characterized in that the sliding contact is secured in a manner protected against twisting on the inner surface of a lateral shank (35) of the yoke (33) as a contact spring (15) and that the contact spring (15) directly slides on a contact path conducted into the vicinity of the bearing eye (31) and embedded in the housing wall (18).

4. A level indicator according to claim 3, characterized in that the contact spring (15) is provided with at least one bent lug (40) engaging into an aperture (41) of the yoke (33) and that the contact spring (15) has a squeezed-out projection (14) as a contact surface which slides on the contact path (19).

5. A level indicator according to at least one of the preceding claims, characterized in that the resistor board (17) is secured to the housing (10) by fixing bolts (50) and snap springs (51) and the current transfer is effected via a pressure spring (52) squeezed between a contact path (20) and the resistance path (16), and a spike (53) swerved from the contact path and perpendicularly projecting from it serves as a guide for the pressure spring (52).

6. A level indicator according to claim 1 or 2, characterized in that a resistor board (17) is connected with the yoke (33) in a manner protected against twisting and the resistance path (16) slides via stationary contacts on the contact paths (19, 20) secured in the housing.

7. A level indicator according to claim 6, characterized in that the resistor board (17) is locked on the inner surface of a lateral shank (35) of the yoke (33).

8. A level indicator according to claim 6, characterized in that the resistor board (17) is riveted with a contact spring (60) connected with the yoke (33) in a manner protected against twisting.

9. A level indicator according to claim 7 or 8, characterized in that the resistor board (17) includes two resistance paths (70, 71) shaped like ring segments and interconnected by a radial web, on which resistance paths the stationary contacts slide.

**Revendications**

1. Indicateur de niveau de remplissage, notamment pour la mesure du contenu du réservoir de véhicules automibiles, cet indicateur comprenant un levier de flotteur (12), dont l'extrémité coudée (38) peut pivoter dans un oeil de support (31) d'une paroi (30) de boîtier, un étrier (33) essentiellement en forme de U avec des trous (36), coaxiaux avec l'oeil de support (31), dans les ailes latérales (34, 35), trous à travers lesquells l'extrémité (38) du levier de flotteur (12) est introduite, et un moyen pour le maintien du levier de flotteur (12) dans la direction axiale, un mouvement relatif entre une plaque à résistance (17) et un contact glissant sur celle-ci étant dérivé à partir du mouvement de pivotement du levier de flotteur (12), ledit indicateur de niveau étant caractérisé en ce que l'étrier (33) est glissé sur l'oeil de support (31), en ce que, pour le maintien axial du levier de flotteur (12), il est prévu un moyen de verrouillage (37), qui est formé sur une aile latérale (34) de l'étrier (33), et en ce que la plaque à résistance (17) ou le contact glissant est solidarisé avec l'étrier (33).

2. Indicateur de niveau selon la revendication 1, caractérisé en ce que, comme moyen de verrouillage, on utilise deux ergots de verrouillage (37) qui sont en prise autour du levier de flotteur (12) à la manière d'une pince à linge.

3. Indicateur de niveau selon l'une des revendications 1 ou 2, caractérisé en ce que le contact glissant est fixé sans possibilité de rotation comme ressort de contact (15) à la surface interne d'une paroi latérale (35) de l'étrier (33) et en ce que le ressort de contact (15) glisse directement sur une piste de contact (19) amenée dans la région de l'oeil de support (31) et encastrée dans la paroi (18) du boîtier.

4. Indicateur de niveau selon la revendication 3, caractérisé en ce que le ressort de contact (15) présente au moins une languette pliée (40), qui s'engage dans un trou (41) de l'étrier (33), et en ce que le ressort de contact (15) présente comme surface de contact un relief embouti (14) qui glisse sur la piste de contact (19).

5. Indicateur de niveau selon au moins l'une quelconque des revendications 1 à 4, caractérisé en ce que la plaque à résistance (17) est fixée au boîtier (10) au moyen de chevilles de fixation (50) et de ressorts à encliquetage (51) et en ce que le transfert de courant s'effectue par l'intermédiaire d'un ressort pression (52) qui est comprimé entre une piste de contact (20) et la piste résistante (16), un ergot (53), dépassant de la piste de contact (20) et à angle droit de celle-ci, servant de guide pour le ressort de pression (52).

6. Indicateur de niveau selon l'une des revendications 1 ou 2, caractérisé en ce que la plaque à résistance (17) est liée sans possibilité de rotation à l'étrier (33) et la piste résistante (16) glisse via des contacts fixes sur les pistes de contact (19, 20) fixées dans le boîtier.

7. Indicateur de niveau selon la revendication 6, caractérisé en ce que la plaque à résistance (17) est verrouillée la surface interne d'une aile latérale (35) de l'étrier (33).

8. Indicateur de niveau selon la revendication 6, caractérisé en ce que la plaque à résistance (17) est rivetée à un ressort de contact (60) fixé sans possibilité de rotation à l'étrier (33).

9. Indicateur de niveau selon l'une des revendications 7 ou 8, caractérisé en ce que la plaque à résistance (17) présente deux pistes résistantes (70, 71), en forme de segments circulaires, reliées l'une à l'autre par une âme radiale, les contacts fixes glissant sur lesdites pistes.

FIG. 1

FIG. 4

50

51

17

FIG.5

20

17

52

53

10

30 18 19 21 20

52

10

11

31

15

16

17

19 21

FIG.2

0 007 072

FIG. 3

FIG.6

FIG.7

0 007 072

FIG.8

FIG.9

FIG.11

FIG.10

0 007 072